# EUROPÄISCHE PATENTSCHRIFT

(11) **EP 4 070 689 B1**
(45) Veröffentlichungstag und Bekanntmachung des Hinweises auf die Patenterteilung: **21.08.2024**
(21) Anmeldenummer: 21167317.3
(22) Anmeldetag: 08.04.2021
(51) Int. Cl.: A46B 9/04, B33Y 10/00, B33Y 80/00, A46B 15/00, A61C 17/02, A61C 17/22

(54) **VERFAHREN ZUR HERSTELLUNG EINER MUNDSTÜCK-ZAHNBÜRSTE SOWIE MUNDSTÜCK-ZAHNBÜRSTE**
METHOD FOR PRODUCING A MOUTHPIECE TOOTHBRUSH AND A MOUTHPIECE TOOTHBRUSH
PROCÉDÉ DE FABRICATION D'UNE PARTIE BUCCALE DE BROSSE À DENTS, AINSI QUE PARTIE BUCCALE DE BROSSE À DENTS

(43) Veröffentlichungstag der Anmeldung: 12.10.2022
(73) Patentinhaber: Ivoclar Vivadent AG, 9494 Schaan (LI)
(72) Erfinder: JOHN, Hendrik, 9470 Buchs (CH); NIEDRIG, Christian, 9478 Azmoos (CH); SENTI, Theresa Sujata Maria, 9497 Triesenberg (LI); HAUNER-WESTPHAL, Martina, 6800 Feldkirch (AT); GLEBOVA, Tatiana, 9470 Buchs (CH)
(74) Vertreter: Baldus, Oliver

(56) Entgegenhaltungen:
- EP-A1- 3 366 261
- WO-A1-2007/121760
- KR-B1- 101 781 631
- US-A1- 2015 072 300

## Beschreibung

Die Erfindung betrifft ein Verfahren zur Herstellung einer Mundstück-Zahnbürste gemäß dem Oberbegriff der Ansprüche 1 und 16, sowie eine Mundstück-Zahnbürste, gemäß dem Oberbegriff von Anspruch 16 Zahnbürsten mit einer gebogenen, nahezu parabolischen Form, für den Einsatz im Mund eines Anwenders sind seit langem bekannt. Derartige Zahnbürsten haben eine dem Zahnbogen des Anwenders entsprechende Form. Sie werden auch Mundstück-Zahnbürsten genannt und sind dazu bestimmt, mit ihren Borsten am Zahnbogen des Patienten, nach Möglichkeit sowohl oral als auch vestibulär, anzuliegen und dort ihre Putzwirkung zu entfalten.

Ein älteres Beispiel für eine derartige Zahnbürste ist die aus der DE 10 35 096 B bekannte Zahnbürste. Diese ist für die manuelle Betätigung geeignet.

Es sind auch elektrisch angetriebene derartige Mundstück-Zahnbürsten bekannt geworden. Ein Beispiel für eine solche Zahnbürste lässt sich der EP 2 384 160 A1 entnehmen.

EP3366261 betrifft eine Vorrichtung zur Zahnreinigung, die mit einer auf die individuelle Form des Ober-/Unterkiefers einschließlich vorhandener Zahnkronen angepasste und in Schwingungen versetzbare Kappe mit einem U-förmigen Querschnitt mit einem Handgriff versehen ist, wobei die Kappe dichtend auf das die Zähne umgebende Zahnfleisch am Zahnhals, einen Innenraum (Lumen) umschließend, aufsetzbar ist, derart, dass die Zähne und der Zahnhals bzw. der Übergang vom Zahn zum Zahnfleisch vollständig von dem Innenraum und dicht umschlossen sind.

Ein Problem derartiger Zahnbürsten liegt darin, dass die Borsten sich von einem vergleichsweise komplizierten Formstück wegerstrecken müssen. Dieses weist auch Innenecken auf und ist daher vergleichsweise schlecht zu reinigen.

Daher ist es vorgeschlagen worden, das Formstück mit den Borsten abnehmbar vom Antrieb auszugestalten. Das Mundstück soll dann mit einem scharfen Wasserstrahl gereinigt werden. Mit dieser Lösung lassen sich befriedigende hygienische Zustände sicherstellen.

Dennoch hat sich die Mundstück-Zahnbürste nicht durchgesetzt. Hauptgrund war, dass die Putzwirkung sehr unterschiedlich beurteilt wurde. Dies hat man in zahnärztlichen Kreisen überwiegend auf das unterschiedliche Putzverhalten, die unterschiedliche Sorgfalt der einzelnen Anwender und die suboptimale Ausführung und Anregung der Borsten zurückgeführt.

Daher liegt der Erfindung die Aufgabe zugrunde, ein Verfahren zur Herstellung einer Mundstück-Zahnbürste gemäß dem Oberbegriff des Anspruchs 1 sowie eine Mundstück-Zahnbürste gemäß dem Oberbegriff von Anspruch 16 zu schaffen, bei dem bzw. bei der eine gleichbleibend gute Putzwirkung sichergestellt ist.

Diese Aufgabe wird erfindungsgemäß durch Anspruch 1 und 16 gelöst.

Vorteilhafte Weiterbildungen ergeben sich aus den Unteransprüchen.

Erfindungsgemäß ist es vorgesehen, die Mundstück-Zahnbürste patientenspezifisch herzustellen. Damit ist sichergestellt, dass in allen Fällen eine perfekte Passung und Putzwirkung entsteht. Hierbei lässt sich besonders die Tatsache ausnutzen, dass die erfindungsgemäße Zahnbürste im Querschnitt einen U-förmigen Kanal aufweist, der mit Borsten ausgekleidet ist und dessen Borsten und insbesondere Borstenspitzen an den Anwender angepasst sind.

Der Abstand der einander gegenüberliegenden Borstenspitzen, also der oralen und nach vestibulär weisenden Borstenspitzen einerseits und der vestibulären und nach oral weisenden Borstenspitzen andererseits, ist ebenfalls patientenspezifisch angepasst, und zwar so, dass die Borsten mit ihren Borstenspitzen möglichst gleichmässig über die Zahnoberflächen verteilt sind und insbesondere in die besonders verschmutzungsempfindlichen Zahnzwischenräume eindringen können.

Der Borstenspitzen-Abstand ist also geringer als die vestibulär-orale Breite der Zähne des Anwenders.

Durch die erfindungsgemäße besondere Anordnung erfolgt also ein vorgegebener und anwenderunabhängiger Putzandruck der Borsten.

Durch einen externen translatorischen und/oder rotatorischen Antrieb wird zudem eine von der Handhabung durch den einzelnen Anwender unabhängige Putzwirkung erzielt, wodurch sich bei allen Anwendern ein gleichbleibend gutes Putzergebnis ergibt. Dies ist insbesondere bei alten Menschen oder Menschen mit Behinderung sinnvoll, die nicht mehr selbständig in der Lage sind, ihre Zähne zu putzen.

Erfindungsgemäß ist es vorgesehen, dass für die Herstellung einer solchen Mundstück-Zahnbürste der Patientenmund gescannt wird. Alternativ ist es auch möglich, einen Abdruck zu nehmen und diesen in an sich bekannter Weise zu scannen.

Damit liegen Scandaten des Patientenmundes vor. Basierend auf diesen wird ein Borstenraum mit im Wesentlichen gleichbleibender Dicke um den Zahnbogen konstruiert. Der konstruierte Borstenraum entspricht insofern gleichsam einem virtuellen Aufmaß bei der Konstruktion des Formstücks der Mundstück-Zahnbürste basierend auf den Scandaten.

Basierend auf diesem Konstruktionsergebnis bzw. Berechnungsergebnis wird das Zahnbürsten-Formstück berechnet. Die dem Zahnbogen zugewandte Fläche des Zahnbürsten-Formstücks wird nach oder während der Herstellung des Formstücks mit einem Borstenteppich belegt. Erfindungsgemäß ist der Borstenteppich Standardware, und dennoch ergibt sich durch die Individualisierung des Formstücks eine einfach herzustellende und daher preisgünstige, aber an den individuellen Anwender angepasste Zahnbürste.

Die Dicke des virtuellen Borstenraums ist so ausgelegt, dass der erwünschte Putzandruck bereitgestellt wird. Die Dicke ist dementsprechend größer als eine lichte Weite zwischen dem Zahnbogen und dem Formstück ausgelegt.

Über eine herstellerseitig vorgegebene Einstellung der Differenz zwischen der tatsächlichen Dicke des Borstenteppichs und der virtuellen Dicke des Borstenraumes lässt sich der Putzandruck einstellen. Je größer die Differenz ist, desto größer ist der Putzandruck.

Ein erfindungsgemäß besonders günstiger Vorteil ergibt sich aus der Realisierung des Borstenteppichs als Standardware: der Borstenteppich kann austauschbar auf dem Formstück gelagert sein. Eine solche Lagerung kann beispielsweise durch Kleben erfolgen, oder durch eine formschlüssige Lagerung, entsprechend den an sich bekannten Zahnbürsten mit auswechselbarem Bürstenkopf. Bei der Anpassung des standardisierten Borstenteppichs ist es von Vorteil, wenn sich der Borstenteppich elastisch oder plastisch verformen lässt, damit er sich der Kavität/Innenseite des individualisierten Formstücks anpassen kann.

Durch die Auswechselbarkeit des Borstenteppichs lässt sich die Mundhygiene weiter verbessern.

In erfindungsgemäß vorteilhafter Weiterbildung ist es vorgesehen, dass in dem Formstück und der Borstenbasis des Borstenteppichs Kanäle ausgebildet sind. Diese sind an eine Quelle einer Spülflüssigkeit angeschlossen, die Spülflüssigkeit in die Kanäle einleitet und diese der Zahnoberfläche zuführt.

Die Quelle kann beispielsweise als Überdruck-Quelle nach der Art einer handelsüblichen Munddusche ausgebildet sein. Bevorzugt wird die Spülflüssigkeit unter erheblichem Überdruck zugeführt, mit beispielsweise 1 bis 8 bar, und erfolgt pulsierend, z.B. mit 30 bis 2000 Wasserpulsen pro Minute.

Besonders günstig ist es, wenn die Kanäle sowohl das Formstück als auch den Borstenteppich durchtreten und insbesondere, wenn sie im Borstenteppich an der Teppichbasis enden, und zwar zwischen den Borsten.

Bevorzugt sind Kanäle für die Spülflüssigkeit sowohl im vestibulären Bereich als auch im oralen Bereich des Formstück vorgesehen. Damit ist es möglich, auf der einen Seite des Zahnbogens Unterdruck und auf der anderen Seite Überdruck bereitzustellen und damit eine Durchspülung zu gewährleisten.

Bevorzugt enden die sich oral-vestibulär erstreckenden Kanäle an der vom Zahnbogen abgewandten Seite des Formstücks an einer Spülleitung, die sich medial-distal erstreckt. Eine Spülleitung verläuft dann oral und eine weitere vestibulär, und eine steht unter Überdruck und eine unter Unterdruck.

Es ist auch möglich, die Spülrichtung bei Bedarf durch Tauschen des Anschlusses der Überdruck-Quelle mit der Unterdruck-Quelle zu ändern.

Der als Standardware bereitgestellte Borstenteppich kann beispielsweise mehrere vergleichsweise kleine Löcher in der Teppichbasis aufweisen. Die Kanäle in dem Formstück können einen gegenüber den Löchern größeren Querschnitt aufweisen, beispielsweise auch so, dass ein Kanal ein Loch oder auch mehrere Löcher mit Spülflüssigkeit versorgt.

Bei dieser Ausführungsform ist es nicht erforderlich, im Nachhinein eine Anpassung der Löcher in der Teppichbasis an die Kanäle in dem Formstück vorzunehmen.

Alternativ ist es auch möglich, sowohl den Borstenteppich als auch das Formstück frei von Kanälen herzustellen. Bei dieser Ausführungsform kann dann in einem Perforationsschritt die erwünschte Anzahl von Löchern und Kanälen in einem Zuge erstellt werden. Bevorzugt erfolgt die Perforation dann von der Seite des Borstenteppichs her, also von der Kavität des Formstücks her.

Bei der Herstellung des erfindungsgemäßen Mundstücks kann beispielsweise ein Spritzgussverfahren verwendet werden. Die Spritzgussform wird individualisiert hergestellt, basierend auf den Scandaten, beispielsweise durch Fräsen oder durch ein additives Herstellverfahren, also durch additive manufacturing.

Der als Standardware vorliegende Borstenteppich wird dann auf der dem Zahnbogen zugewandten Fläche des Formstücks aufgebracht und befestigt. Dies kann beispielsweise mittels eines biokompatiblen Haftmittels geschehen.

Es ist auch möglich, den Borstenteppich lösbar und wieder anbringbar mit dem Formstück zu verbinden. Bei dieser Ausführungsform lässt sich der Borstenteppich vom Anwender besonders gut reinigen.

In beiden vorgenannten fällen passt sich der Borstenteppich aufgrund seiner Elastizität oder Plastizität der dem Zahnbogen zugewandten Freiformfläche des Formstücks an.

In einer weiteren Ausführungsform ist es vorgesehen, den Borstenteppich in die Spritzgussform einzulegen und das Formstück an der Teppichbasis anzuspritzen. Diese Lösung ermöglicht eine besonders gute Haftung zwischen dem Borstenteppich und dem Formstück.

Die Materialwahl für das Formstück und den Borstenteppich lässt sich in weiten Bereichen an die Erfordernisse anpassen. Bevorzugt besteht das Formstück aus PMMA und der Borstenteppich aus einem Elastomer, beispielsweise medizinischem Silikon, wobei auch unterschiedliche Härtegrade innerhalb des Borstenteppichs möglich sind und der Borstenteppich per Vakuumguss oder Spritzguss realisiert werden kann.

Nach Aufbringen auf dem Formstück wird der überstehende Borstenteppich kurzerhand abgeschnitten.

Der Borstenteppich selbst kann einstückig hergestellt werden. Alternativ ist es auch möglich, die Borsten in an sich bekannter Weise in eine etwas weichere Teppichbasis einzubetten. Beispielsweise können die Borsten hierzu umspritzt werden.

Es ist auch möglich, das Mundstück zunächst virtuell in einer CAD-Software zu modellieren und hierzu die Innenseite der für den Zahnbogen vorgesehenen Kavität des Formstücks mit einer borstenartigen Textur zu versehen. Die Herstellung erfolgt bevorzugt über additive manufacturing und ermöglicht die individuelle Massenfertigung der individualisierten Mundstück-Zahnbürste in einem Stück.

Alternativ ist es auch in anderer Weise möglich, eine gleichsam einstückige Herstellung zu realisieren. Bei dieser Ausführungsform kann das Formstück ebenfalls aus Elastomer bestehen und weist bevorzugt eine formsteife Einlage aus Metall oder Hartkunststoff auf, die die erforderliche Formstabilität bereitstellt.

Die Formstabilität des Formstücks ist erforderlich, um die erwünschten Schwingungen zu den Borsten zu übertragen. Ein Schwingungsgenerator ist in an sich bekannter Weise mit dem Formstück fest verbunden, bevorzugt aber so, dass die Verbindung lösbar ist.

Der Schwingungsgenerator versetzt das Mundstück in translatorische und/oder rotatorische Bewegungen. Die Borsten bewegen sich dementsprechend über die Zahnoberfläche und Gingiva-Oberfläche ebenfalls translatorisch und/oder rotatorisch.

Durch diese Bewegung wird die erfindungsgemäße Reinigung erzeugt, und zwar mit dem erwünschten, von Patient zu Patient gleichen Anpressdruck der Borsten an der Zahnoberfläche, dem sogenannten Putzandruck.

Bevorzugt überdeckt das Formstück den gesamten Zahnbogen und weist insofern eine im wesentlichen parabolische Form auf. Im Querschnitt ist das Formstück bei dieser Ausführungsform U-förmig, wobei im Inneren des Us, der Kavität, der Zahnbogen ist und dort gereinigt wird.

Alternativ ist es möglich, das Mundstück im Querschnitt H-förmig auszubilden. Der Oberkiefer-Zahnbogen wird dann im oberen U des Mundstücks, also der oberen Kavität des Formstücks, und der Unterkiefer-Zahnbogen im unteren U des Mundstücks, also der unteren Kavität des Formstücks, aufgenommen.

Bevorzugt ragen der Borstenteppich und das Formstück über den Bereich der Zähne in Richtung zervikal/apical/subgingival hinaus und überdecken insofern einen Teil der Gingiva.

Bekanntlich ist der Zahnfleischsaum besonders kritisch zu reinigen, so dass erfindungsgemäß dort eine besondere Reinigungswirkung mit einem Intensivreinigungsbereich vorgesehen ist. Dieser kann beispielsweise durch die Erhöhung des Anpressdrucks und/oder durch eine erhöhte Anzahl von Borsten pro Quadratmillimeter realisiert werden.

In einer weiteren Ausgestaltung ist es vorgesehen, dass individuelle Scandaten für die Herstellung eines individuellen Borstenteppichs verwendet werden und dieser insbesondere direkt per Additive Manufacturing hergestellt wird und anschliessend in das Zahnbürsten-Formstück eingesetzt wird oder per Additive Manufacturing eine Gussform für den individuellen Borstenteppich gefertigt wird.

Bei dieser Lösung ist es auch möglich, dass das individuell hergestellte Zahnbürsten-Formstück und der individuell hergestellte Borstenteppich in einem Zuge gemeinsam 3D-gedruckt werden, insbesondere in einem Mehrkomponenten-Druckverfahren, und Zahnbürsten-Formstück und Borstenteppich mit unterschiedlichen mechanischen Eigenschaften hergestellt werden, insbesondere das Formstück aus einem härteren Material als der Borstenteppich hergestellt wird.

Weitere Vorteile, Einzelheiten und Merkmale ergeben sich aus der nachfolgenden Beschreibung mehrere Ausführungsbeispiele der Erfindung anhand der Zeichnung.

Es zeigen:
- Fig. 1: eine schematische Draufsicht auf eine erfindungsgemäße Mundstück-Zahnbürste in einer ersten Ausführungsform;
- Fig. 2: einen Schnitt durch eine Ausführungsform einer erfindungsgemäßen Mundstück-Zahnbürste;
- Fig. 3: einen Schnitt durch eine weitere Ausführungsform einer erfindungsgemäßen Mundstück-Zahnbürste;
- Fig. 4: einen Schnitt durch eine weitere Ausführungsform einer erfindungsgemäßen Mundstück-Zahnbürste;
- Fig. 5: einen Schnitt durch einen erfindungsgemäßen Borstenteppich; und
- Fig. 6: eine vergrößerte Ansicht eines Details des Borstenteppichs gemäss Fig. 5.

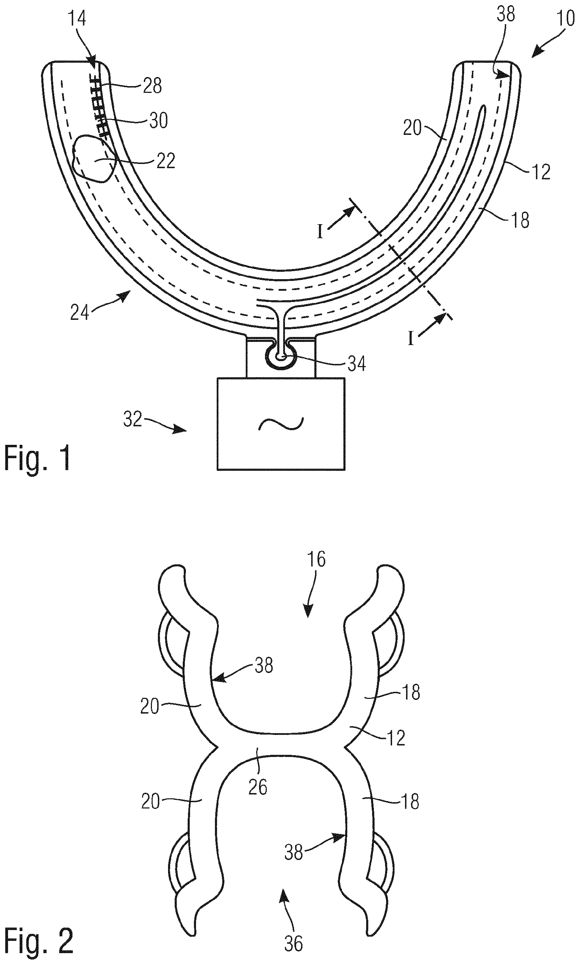

Fig. 1 zeigt eine Draufsicht auf eine Ausführungsform einer erfindungsgemäßen Mundstück-Zahnbürste 10 in einer schematischen Darstellung.

Die Mundstück-Zahnbürste 10 weist ein Formstück 12 und einen Borstenteppich 14 auf. das Formstück 12 ist so ausgebildet, dass es einen nicht dargestellten menschlichen Zahnbogen aufnehmen kann. Hierzu ist eine Kavität 16 vorgesehen, die auch aus Fig. 2 ersichtlich ist und im Querschnitt U-förmig ist.

Die Kavität 16 verläuft im Wesentlichen parabelförmig zwischen einer vestibulären Seitenwand 18 und einer oralen Seitenwand 20. Ein Zahn 22, nämlich ein Molar, ist in Fig. 1 schematisch dargestellt. Der Zahn 22 hat eine etwas geringere Breite in oral-vestibulärer Richtung als die lichte Weite zwischen den Seitenwänden 18 und 20.

Der Zwischenraum wird von dem erfindungsgemäßen Borstenteppich 14 eingenommen. Der Borstenteppich 14 kleidet die Kavität 16 vollständig aus, liegt also an den Seitenwänden 18 und 20 und auch an der Bodenwand 26 der Kavität 16.

Der Borstenteppich 14 besteht aus einer Teppichbasis 28 und einer Vielzahl von Borsten 30. In dem dargestellten Ausführungsbeispiel sind die Borsten 30 und die Teppichbasis 28 einstückig und bestehen aus biokompatiblem und medizinischem Silikon.

Der Borstenteppich 14 ist per Vakuumguss hergestellt. Es sind auch unterschiedliche Härten des elastischen Borstenteppichs 14 möglich, die an die Erfordernisse angepasst sind und je nach Bedarf eingesetzt werden können.

In dem dargestellten Ausführungsbeispiel ist der Borstenteppich 14 mit einem biokompatiblen Haftmittel mit dem Formstück 12 verbunden. Er ist zu Reinigungszwecken ablösbar und wieder anklebbar.

Der Borstenteppich 14 ist dicker als die Differenz zwischen der lichten Weite der Kavität 16 und der Breite des Zahns 22. Hierdurch wird er sowohl auf der oralen Seite als auch auf der vestibulären Seite an den Zahn 22 und entsprechend auch an die anderen Zähne des Zahnbogens angedrückt.

Damit entfaltet die Zahnbürste 10 eine Putzwirkung bei einer Relativbewegung zwischen dem Zahnbogen und dem Mundstück 24.

Die Größe des Anpressdrucks entspricht dem Mass, um das der Borstenteppich 14 dicker als die obige Differenz ist. Der Putzandruck ist auf der oralen und der gingivalen Seite des Zahnbogens in etwa gleich groß.

Das Mundstück 24 ist an dem Zahnbogen selbstzentrierend.

Zu der Mundstück-Zahnbürste 10 gehört neben dem Mundstück 24 auch ein Schwingungsgenerator 32.

Der Schwingungsgenerator 32 ist im Inzisalbereich des Formstück 12 angebracht, und zwar formschlüssig. Der Schwingungsgenerator versetzt das Mundstück 24 in translatorische und/oder rotatorische Schwingungen. Eine Kupplung 34 ermöglicht die formschlüssige Lagerung, aber dennoch die Abnehmbarkeit des Schwingungsgenerator 32 von dem Formstück 12, was der leichteren Reinigung des Mundstücks 24 zugutekommt.

Erfindungsgemäß wird der Borstenteppich 14 als Standardware mit gleichbleibender Dicke bereitgestellt. Hingegen ist das Formstück 12 individuell an den Anwender angepasst. Für die Herstellung wird zunächst der Mund des Anwenders dreidimensional gescannt. Die Scandaten werden für die Herstellung des Formstück 12 verwendet.

Hierbei wird der Borstenteppich 14, dessen Dicke an sich bekannt ist, einberechnet, jedoch nur teilweise. Seine Dicke wird für die virtuelle Erstellung des Formstücks 12 geringer angenommen als sie tatsächlich ist.

In dem dargestellten Ausführungsbeispiel beträgt die Dicke der Teppichbasis 28 1 mm und die Länge der Borsten 30 1,5 mm. Insofern hat der Bostonteppich 14 tatsächlich eine Dicke von 2,5 mm.

Virtuell wird an der Stelle, an der er zu liegen kommt, nur ein Spalt von 1,5 mm belassen.

Die dem Zahnbogen und der Kavität zugewandte Fläche 38 wird mit dem Borstenteppich 14 belegt. Dadurch weist das Mundstück 24 an der Kavität 16 ein "Übermass" in der Größe von 0,1mm zum Zahnbogen hin auf.

Es ist auch möglich, ein anderes beliebiges geeignetes Übermass zu wählen, z.B. 0,15mm bis 0,5mm.

Dadurch wird bei der Benutzung der erfindungsgemäßen Zahnbürste 10 ein Putzandruck auf die Zähne ausgeübt, der der besseren Reinigung zugutekommt.

Fig. 2 zeigt einen Schnitt entlang der Linie I - I aus Fig. 1. Gleiche Bezugszeichen weisen hier wie auch in den weiteren Figuren auf gleiche oder entsprechende Teile hin.

Bei dieser Ausführungsform ist das Mundstück 24 der Zahnbürste 10 im Wesentlichen Dopple-T-Träger-fürmig oder H-förmig. In Fig. 2 ist lediglich das Formstück 12 dargestellt, dass tatsächlich mit dem Borstenteppich 14 belegt ist.

Das Formstück 12 weist eine Oberkiefer-Kavität 16 für die Aufnahme des Oberkiefer-Zahnbogens auf, und eine Unterkiefer-Kavität 36 für die Aufnahme des Unterkiefer-Zahnbogens. Zwischen diesen erstreckt sich das gemeinsame Verbidunsgelement 26 zwischen OK- und UK-teil als gemeinsame Wand beider Kavitäten 16 und 36.

Der Putzandruck zwischen den Okklusalflächen der Zähne und dem Borstenteppich 14, mit dem die Bodenwand 26 belegt ist, wird durch den Okklusaldruck oder Kaudruck des Anwenders eingestellt.

Dieser Druck ist der einzige, auf den der Anwender Einfluss hat.

In vorteilhafter Ausgestaltung der Erfindung weist der Schwingungsgenerator 32 einen Stromfühler auf. Wenn der Stromfühler erkennt, dass der Putz-Widerstand zu gering ist, also die Stromaufnahme zu gering ist, wird ein Signal abgegeben "Kaudruck erhöhen". Wenn umgekehrt die Stromaufnahme zu groß ist, bedeutet dies, dass der Anwender zu fest zubeißt. In diesem Fall wird ein Signal abgegeben "Kaudruck vermindern".

Damit lässt sich gewährleisten, dass die erfindungsgemäße Mundstück-Zahnbürste 10 immer in einem günstigen Bereich des Putzandrucks arbeitet.

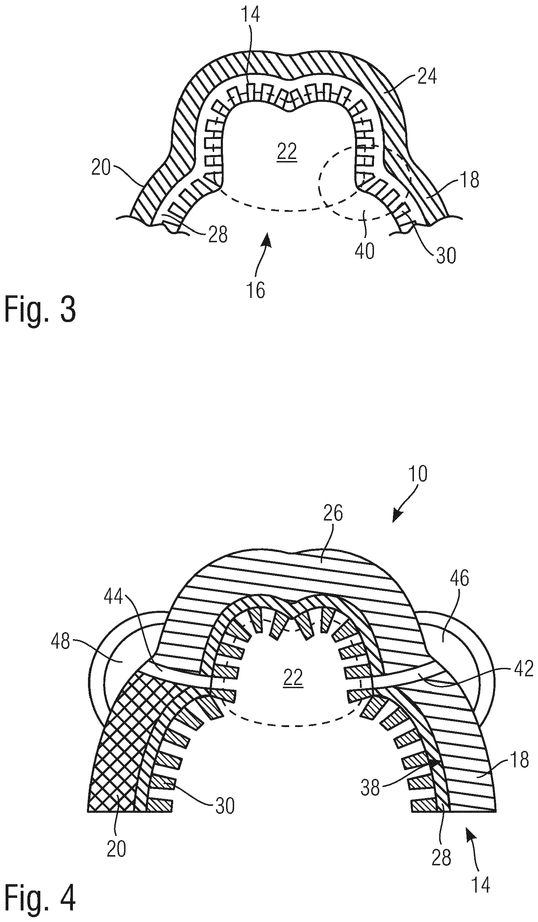

In Fig. 3 ist eine weitere Ausführungsform einer erfindungsgemäßen Mundstück-Zahnbürste 10 im Schnitt durch das Mundstück 24 dargestellt.

Wie ersichtlich ist, erstreckt sich das Formstück 10 im Schnitt an den Schnittverlauf des Zahnbogens angepasst. Das Formstück 10 erstreckt sich nicht nur über den Zahn 22, sondern in Richtung zervikal über diesen hinaus. Das Formstück 10 deckt den zahnnahen Teil der Gingiva ab.

Im Bereich des Gingivasaums ist ein Intensivreinigungsbereich 40 vorgesehen. Dort ist die Einschnürung stärker als es bei einem menschlichen Gingivasaum der Fall ist.

Durch die stärkere Einschnürung ist auch der Putzandruck dort größer als im übrigen Bereich.

Demgegenüber springt das Formstück 10 an der Gingiva selbst weiter zurück, so dass dort der Putzandruck am geringsten ist. Diese Ausgestaltung schont das Zahnfleisch des Anwenders.

Eine weitere Ausführungsform eines erfindungsgemäßen Mundstück 24 ist aus Fig. 4 ersichtlich. Bei dieser Ausführungsform sind Kanäle 42 und 44 vorgesehen, die die Seitenwände 18 und 20 des Formstück 10 durchtreten. Zusätzlich durchtreten sie auch den Borstenteppich 14, nämlich die Teppichbasis 28, oder Borstenteppich und Teppichbasis weisen an den entsprechenden Austrittsöffnungen der Kanäle Aussparungen auf.

Sie münden an der dentalen Seite zwischen Borsten 30. An der Außenseite, also der vestibulären Seite der vestibulären Seitenwand 18 und der oralen Seite der oralen Seitenwand 20 erstrecken sich je Spülleitungen 46 und 48, in die die Kanäle 42 und 44 münden.

Die Spülleitungen 46 und 48 verlaufen mesial-distal und gehen aus von dem Bereich der Kupplung 34.

Eine Leitung dieser Spülleitungen 46 und 48 ist an eine Überdruckquelle und die andere an eine Unterdruckquelle angeschlossen.

Damit wird nach der Art einer Munddusche eine zusätzliche Spülwirkung für Speisereste und Plaque an den Zähnen des Anwenders realisiert. Durch die Kombination von Unterdruck und Überdruck erfolgt ein Durchströmen der Zahnzwischenräume, die besonders verschmutzungsgefährdet sind.

Die Spülrichtung lässt sich bei Bedarf auch umkehren, einfach, indem der Anschluss der Überdruckquelle mit dem der Unterdruckquelle vertauscht wird.

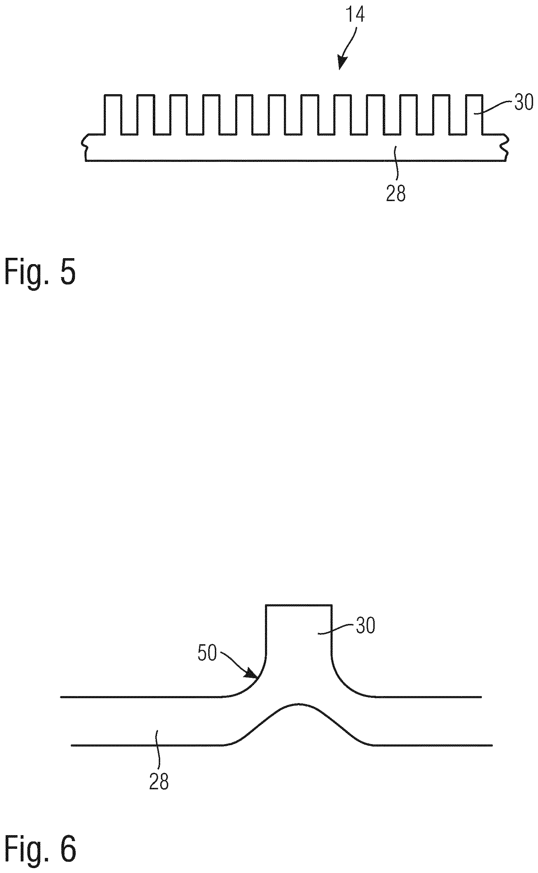

Der Zahn 22 ist in Fig. 5 schematisch und gestrichelt angedeutet. Wie ersichtlich ist, sind seine Abmessungen größer als der von den Borstenspitzen der Borsten 30 gebildete Freiraum. Die Borsten 30 werden durch die rotatorische und translatorische Bewegung des Mundstücks 24 an der Zahnoberfläche entlang geführt und putzen den Zahn 22.

Dies gilt im verminderten Maße auch für den Bereich der Gingiva; dort ist die Überlappung zwischen den Borstenspitzen und dem Zahnfleisch geringer als bei dem Zahn 22.

In dem dargestellten Ausführungsbeispiel hat das Formstück 10 eine Stärke von 3 mm und der Borstenteppich 14 eine Stärke von 2,5 Millimeter. Es versteht sich, dass diese Abmessungen in weiten Bereichen an die Erfordernisse anpassbar sind.

Aus Fig. 5 ist ein Schnitt durch einen Borstenteppich 14 in schematisierter Form ersichtlich. Die Borsten 30 sind bei dieser Ausführungsform zylindrisch ausgebildet. Es versteht sich, dass die genaue Form auch hier in weiten Bereichen an die Erfordernisse anpassbar ist. Es sind auch konische Ausgestaltungen der Borsten möglich, um nur ein Beispiel zu nennen. Bei dieser Ausführungsform sind Borsten 30 und Teppichbasis 28 einstückig. Stattdessen ist es auch möglich, die Borsten in an sich bekannter Weise zu umspritzen, um so den Borstenteppich 14 herzustellen.

Aus Fig. 6 ist eine mögliche Gestaltung des Übergangs zwischen den Borsten 30 und der Teppichbasis 28 ersichtlich. Die Borsten werden auf Scherung beansprucht. Um die Kerbwirkung am Übergang zu reduzieren, ist dieser ausgerundet, insbesondere mit einem Radius 50.

## Patentansprüche

1. Verfahren zur Herstellung einer Mundstück-Zahnbürste (10), **dadurch gekennzeichnet, dass** mindestens ein Zahnbogen des Patienten, für den die Zahnbürste bestimmt ist, unter Erzeugung von Scandaten gescannt wird, oder ein Abdruck des Zahnbogens erstellt wird, und, basierend auf den Scandaten oder dem dann digitalisierten Abdruck, der von dem Zahnbogen eingenommene Zahnbogen-Raum erfasst wird, dass ein Borstenraum, um den mindestens einen Zahnbogen konstruiert wird, und ein Zahnbürsten-Formstück (12) berechnet wird, dessen dem Zahnbogen zugewandte Fläche (38) durch den Zahnbogen-Raum plus den Borstenraum bestimmt ist, und dass die Fläche einen Borstenteppich (14) aufweist, wobei der Zahnbogen-Raum den Bereich der Zähne des Patienten plus den der angrenzenden Gingiva umfasst, und der Borstenraum sich über die Zähne hinaus Richtung Gingiva erstreckt, labial, bukkal und oral und das Zahnbürsten-Formstück im Bereich des Gingivasaumes in Richtung Zähne unter Bildung eines Intensivreinigungsbereichs (40) vorspringt und Gingivasaum-Borsten sich vom Intensivreinigungsbereich (40) sowohl in Richtung Zähne als auch in Richtung Gingiva erstrecken.

2. Verfahren nach Anspruch 1, **dadurch gekennzeichnet, dass** das Zahnbürsten-Formstück für jeden Patienten individuell herstellt wird und der Borstenteppich vieler Patienten hinsichtlich der Borstenlänge, der Borstenstärke, der Borstenausrichtung und/oder der Borstenbasis zueinander gleich ist.

3. Verfahren nach einem der vorhergehenden Ansprüche, **dadurch gekennzeichnet, dass** der Borstenraum sich über den Bereich der Zähne und ausschließlich okklusal/inzisal des Bereichs der Gingiva erstreckt.

4. Verfahren nach einem der vorhergehenden Ansprüche, **dadurch gekennzeichnet, dass** der Borstenteppich eine Borstenbasis aufweist in der Borsten verankert sind, und/oder Borstenbasis und Borsten des Borstenteppichs einstückig ausgebildet sind, welche Borsten beim Einsatz der Mundstück-Zahnbürste zum Zahnbogen weisen.

5. Verfahren nach einem der vorhergehenden Ansprüche, **dadurch gekennzeichnet, dass** Borsten des Borstenteppichs sich durch den Borstenraum hindurch erstrecken, an dem Zahnbogenraum anliegen, und/oder um ein vorgegebenes Maß, bevorzugt zwischen 0,05 mm und 0,5
mm, in den Zahnbogen-Raum hineinragen.

6. Verfahren nach einem der vorhergehenden Ansprüche, **dadurch gekennzeichnet, dass** der Borstenraum über seine Erstreckung entlang der Fläche eine gleiche Stärke aufweist.

7. Verfahren nach einem der vorhergehenden Ansprüche, **dadurch gekennzeichnet, dass** der Borstenteppich den Borstenraum ausfüllt und eine Vielzahl von Borsten aufweist, die senkrecht zur Zahnoberfläche orientiert in einer Borstenbasis gelagert sind.

8. Verfahren nach einem der vorhergehenden Ansprüche, **dadurch gekennzeichnet, dass** der Borstenteppich eine Vielzahl von verteilten Borsten aufweist, von denen ein Gingiva-Anteil sich schräg zur dem Zahnbogen zugewandten Fläche in Richtung Gingiva erstreckt, und ein weiterer Teil, der Okklusal/Inzisal-Anteil, sich schräg zur dem Zahnbogen zugewandten Fläche in Richtung okklusal/inzisal erstreckt.

9. Verfahren nach einem der vorhergehenden Ansprüche, **dadurch gekennzeichnet, dass** das Zahnbürsten-Formstück per 3D-Druck herstellt wird und dann der Borstenteppich auf die okklusale Innenfläche des Zahnbürsten-Formstücks aufgebracht wird.

10. Verfahren nach einem der vorhergehenden Ansprüche, **dadurch gekennzeichnet, dass** der Borstenteppich auf oder in dem Zahnbürsten-Formstück austauschbar gelagert ist.

11. Verfahren nach einem der vorhergehenden Ansprüche, **dadurch gekennzeichnet, dass** das Zahnbürsten-Formstück im Schnitt die Form eines Doppel-T-Trägers aufweist und für die gleichzeitige Applikation an Oberkiefer und Unterkiefer des Patienten bestimmt ist.

12. Verfahren nach einem der vorhergehenden Ansprüche, **dadurch gekennzeichnet, dass** mindestens ein Kanal das Zahnbürsten-Formstück durchtritt, mit welchem der Borstenteppich unter Unterdruck setzbar ist um den Borstenteppich per Unterdruck zu fixieren.

13. Verfahren nach einem der vorhergehenden Ansprüche, **dadurch gekennzeichnet, dass** basierend auf eine Mehrzahl von zueinander ähnlichen Scandaten eine individualisierte Kleinserie von Zahnbürsten-Formstücken und dann von Mundstück-Zahnbürsten hergestellt wird.

14. Verfahren nach einem der vorhergehenden Ansprüche, **dadurch gekennzeichnet, dass** das Zahnbürsten-Formstück zusammen mit dem Borstenteppich aus einem Stück mittels additive Manufacturing gefertigt ist und Zahnbürsten-Formstück und Borstenteppich aus multiplen Materialien mit unterschiedlichen Härtegraden bestehen, bzw. gefertigt werden.

15. Verfahren nach einem der vorhergehenden Ansprüche, **dadurch gekennzeichnet, dass** basierend auf den Scandaten eine Spritzgussform oder eine Vakuumgussform hergestellt wird und der Borstenteppich ebenfalls über eine CAD_Software in den Datensatz als Negativform modelliert wird, und dass die Mundstück-Zahnbürste per Spritzguss oder per Vakuumguss basierend hierauf hergestellt wird.

16. Mundstück-Zahnbürste hergestellt nach dem Verfahren von Anspruch 1, bestehend aus einem Zahnbürsten-Formstück (12) und einem mit diesem verbundenen Borstenteppich (14), wobei das Zahnbürsten-Formstücl (12) basierend auf individuellen Scandaten hergestellt ist und dass auf dem Zahnbürsten-Formstück (12) auf der Innenseite der Borstenteppich (14) auf- oder angebracht ist.

17. Mundstück-Zahnbürste nach Anspruch 16, **dadurch gekennzeichnet, dass** mehrere Kanäle einerseits oral, andererseits vestibulär des Borstenraums in dem Zahnbürsten-Formstück ausgebildet sind, und dass ein Spülmedium in einen Teil der Kanäle eingeleitet und aus einem anderen Teil ausgeleitet wird, und dass das Zahnbürsten-Formstück mehrere innenliegend ausgebildete, also sich durch das Formstück von vestibulär nach oral erstreckende Kanäle aufweist, die oral und/oder vestibulär des Borstenteppichs enden, und deren Austrittsöffnungen an den jeweiligen Zahnzwischenräumen nahe der Gingiva angeordnet sind.

18. Mundstück-Zahnbürste nach Anspruch 17, **dadurch gekennzeichnet, dass** das Formstück an der vestibulären Seite der Kanäle einen Adapter für den Anschluss eines Mundspülungsgerätes aufweist, mit welchem ein Spülmittel in die innenliegenden Kanäle des Zahnbürsten-Formstücks zur Reinigung der Zahnzwischenräume gepumpt werden kann.

19. Mundstück-Zahnbürste nach einem der Ansprüche 16 bis 18, **dadurch gekennzeichnet, dass** die Mundstück-Zahnbürste mit einem Antrieb verbunden oder verbindbar ist, mit welchem die Mundstück-Zahnbürste unter translatorische und/oder rotatorische Schwingungen, setzbar ist, welcher Schwingungsgenerator mit einem Stromfühler verbunden ist, mit welchem dessen Stromaufnahme messbar und signalisierbar ist, welche Stromaufnahme den Putz-Widerstand signalisiert.

## Claims

1. A method for manufacturing a mouthpiece toothbrush, **characterized in that** at least one dental arch of the patient for whom the toothbrush is intended is scanned to generate scan data, or an impression of the dental arch is made, and, based on the scan data or the then digitized impression, the dental arch space occupied by the dental arch is detected, **in that** a bristle space is constructed around the at least one dental arch and a toothbrush molded piece (12) is calculated, the surface (38) of which facing the dental arch is determined by the dental arch space plus the bristle space, and **in that** the surface has a bristle carpet (14), wherein the dental arch space comprises the region of the patient's teeth plus that of the adjacent gingiva, and the bristle space extends beyond the teeth towards the gingiva, labially, buccally and orally, and the toothbrush molded piece projects in the region of the gingival margin in the direction of the teeth, forming an intensive cleaning region (40), and gingival margin bristles extend from the intensive cleaning region both in the direction of the teeth and in the direction of the gingiva.

2. The method according to claim 1, **characterized in that** the toothbrush molded piece is produced individually for each patient and the bristle carpet of many patients is the same with respect to the bristle length, the bristle thickness, the bristle orientation and/or the bristle base.

3. The method according to one of the preceding claims, **characterized in that** the bristle space extends over the region of the teeth and exclusively occlusally/incisally of the gingival region.

4. The method according to one of the preceding claims, **characterized in that** the bristle carpet has a bristle base in which bristles are anchored, and/or the bristle base and bristles of the bristle carpet are configured in a single piece, said bristles facing the dental arch when the mouthpiece toothbrush is used.

5. The method according to one of the preceding claims, **characterized in that** bristles of the bristle carpet extend through the bristle space, abut the dental arch space, and/or project into the dental arch space by a predetermined amount, preferably between 0.05 mm and 0.5 mm.

6. The method according to one of the preceding claims, **characterized in that** the bristle space has an equal thickness over its extension along the surface.

7. The method according to one of the preceding claims, **characterized in that** the bristle carpet fills the bristle space and has a plurality of bristles which are mounted in a bristle base oriented perpendicularly to the tooth surface.

8. The method according to one of the preceding claims, **characterized in that** the bristle carpet has a plurality of distributed bristles, of which a gingival portion extends obliquely to the surface facing the dental arch in the gingival direction, and another portion, the occlusal/incisal portion, extends obliquely to the surface facing the dental arch in the occlusal/incisal direction.

9. The method according to one of the preceding claims, **characterized in that** the toothbrush molded piece is produced by 3D printing and then the bristle carpet is applied to the occlusal inner surface of the toothbrush molded piece.

10. The method according to one of the preceding claims, **characterized in that** the bristle carpet is interchangeably mounted on or in the toothbrush molded piece.

11. The method according to one of the preceding claims, **characterized in that** the toothbrush molded piece has the shape of a double T-beam in section and is intended for simultaneous application to the patient's upper jaw and lower jaw.

12. The method according to one of the preceding claims, **characterized in that** at least one channel passes through the toothbrush molded piece, with which the bristle carpet can be placed under negative pressure in order to fix the bristle carpet by negative pressure.

13. The method according to one of the preceding claims, **characterized in that** an individualized small series of toothbrush molded pieces and then of mouthpiece toothbrushes is produced based on a plurality of mutually similar scan data.

14. The method according to one of the preceding claims, **characterized in that** the toothbrush molded piece together with the bristle carpet is manufactured in one piece by means of additive manufacturing and the toothbrush molded piece and the bristle carpet consist of or are manufactured from multiple materials with different degrees of hardness.

15. The method according to one of the preceding claims, **characterized in that** an injection mold or a vacuum casting mold is produced based on the scan data and the bristle carpet is also modelled in the data set as a negative mold using CAD software, and **in that** the mouthpiece toothbrush is produced by injection molding or by vacuum casting based thereon.

16. A mouthpiece toothbrush manufactured according to the method of claim 1, consisting of a toothbrush molded piece (12) and a bristle carpet (14) connected thereto, wherein the toothbrush molded piece (12) is produced on the basis of individual scan data, and in that the bristle carpet (14) is applied or attached to the inside of the toothbrush molded piece (12).

17. The mouthpiece toothbrush according to claim 16, **characterized in that** several channels are configured on the one hand on the oral side and on the other hand on the vestibular side of the bristle space in the toothbrush molded piece, and **in that** a rinsing medium is introduced into one part of the channels and discharged from another part, and **in that** the toothbrush molded piece has several internally configured channels, that is to say channels extending through the molded piece from vestibular to oral, which end on the oral side and/or on the vestibular side of the bristle carpet, and the outlet openings of which are arranged at the respective interdental spaces close to the gingiva.

18. The mouthpiece toothbrush according to claim 17, **characterized in that** the molded piece has, on the vestibular side of the channels, an adapter for the connection of an oral rinsing device, with which a rinsing agent can be pumped into the internal channels of the toothbrush molded piece for cleaning the interdental spaces.

19. The mouthpiece toothbrush according to one of claims 16 to 18, **characterized in that** the mouthpiece toothbrush is connected or connectable to a drive, with which the mouthpiece toothbrush can be subjected to translational and/or rotatory vibrations, said vibration generator being connected to a current sensor, with which its current consumption can be measured and signalized, said current consumption signaling the cleaning resistance.

## Revendications

1. Procédé de fabrication d'une brosse à dents à embout buccal (10) **caractérisée en ce qu'**au moins une arcade dentaire du patient auquel la brosse à dents est destinée est scannée en générant des données de scan, ou une empreinte de l'arcade dentaire est réalisée et, sur la base des données de scan ou de l'empreinte numérisée par la suite, l'espace d'arcade dentaire occupé par l'arcade dentaire est saisi, **en ce qu'**un espace de poils est construit autour de ladite au moins une arcade dentaire, et une pièce moulée de brosse à dents (12) est calculé, dont la surface faisant face à l'arcade dentaire (38) est déterminée par l'espace de l'arcade dentaire plus l'espace pour les poils, et **en ce que** la surface présente un tapis de poils (14) où l'espace de l'arcade dentaire comprend la zone des dents du patient plus celle de la gencive adjacente, et l'espace pour les poils s'étend au-delà des dents vers la gencive, de manière labiale, buccale et orale, et la pièce moulée de brosse à dents fait saillie dans la zone de lu contour gingival vers les dents en formant une zone de nettoyage intensif (40), et des poils du contour gingivale s'étendent de la zone de nettoyage intensif (40) à la fois vers les dents et vers la gencive.

2. Procédé selon la revendication 1, **caractérisé en ce que** la pièce moulée de brosse à dents est fabriqué individuellement pour chaque patient et **en ce que** le tapis de poils est pareil pour de nombreux patients en termes de longueur de poils, d'épaisseur de poils, d'orientation des poils et/ou de base de poils.

3. Méthode selon l'une des revendications précédentes, **caractérisée en ce que** l'espace pour les poils s'étend sur la zone des dents et exclusivement occlusal/incisive de la zone de la gencive.

4. Procédé selon à l'une des revendications précédentes, **caractérisé en ce que** le tapis de poils présente une base de poils dans laquelle les poils sont ancrés, et/ou que la base des poils et les poils du tapis de poils sont formés en une seule pièce, dont les poils pointent vers l'arcade dentaire lorsque la brosse à dents à embout buccal est utilisée.

5. Procédé selon l'une des revendications précédentes, **caractérisé en ce que** les poils du tapis de poils s'étendent à travers l'espace pour les poils, sont adjacents à l'espace de l'arcade dentaire et/ou pénètrent dans l'espace de l'arcade dentaire par une distance prédéterminée, de préférence entre 0,05 mm et 0,5 mm.

6. Procédé selon l'une des revendications précédentes, **caractérisé en ce que** l'espace pour les poils présente une épaisseur égale sur son extension le long de la surface.

7. Procédé selon l'une des revendications précédentes, **caractérisé en ce que** le tapis de poils remplit l'espace pour les poils et présente un grand nombre de poils qui sont logés dans une base de poils et orientées perpendiculairement à la surface de la dent.

8. Procédé selon l'une des revendications précédentes, **caractérisé en ce que** le tapis de poils présente un grand nombre de poils distribués, dont une partie gingivale s'étend obliquement par rapport à la surface tournée vers l'arcade dentaire dans le sens gingival, et une autre partie, la partie occlusale/incisive, s'étend obliquement jusqu'à la zone faisant face à l'arcade dentaire dans le sens occlusal/incisal.

9. Procédé selon à l'une des revendications précédentes, **caractérisé par le fait que** la pièce moulée de brosse à dents est fabriquée par impression 3D, et en ce que le tapis de poils est ensuite appliqué sur la surface interne occlusale de la pièce moulée de brosse à dents.

10. Procédé selon à l'une des revendications précédentes, **caractérisé par le fait que** le tapis de poils est monté de manière interchangeable sur ou dans la pièce moulée de brosse à dents.

11. Procédé selon à l'une des revendications précédentes, **caractérisé en ce que** la pièce moulée de brosse à dents présente, en section, la forme d'un double support en T et est destiné à être appliqué simultanément sur la mâchoire supérieure et la mâchoire inférieure du patient.

12. Procédé selon à l'une des revendications précédentes, **caractérisé en ce qu'**au moins un canal traverse la pièce moulée de brosse à dents, avec lequel le tapis de poils peut être placé sous dépression afin de fixer le tapis de poils par dépression.

13. Procédé selon à l'une des revendications précédentes, **caractérisé en ce qu'**une petite série individualisée de raccords de brosse à dents, et ensuite de brosses à dents à embout buccal, est fabriquée sur la base d'une pluralité de données de balayage similaires.

14. Procédé selon l'une des revendications précédentes, **caractérisé en ce que** la pièce moulée de brosse à dents est fabriqué en une seule pièce avec le tapis de poils au moyen d'une fabrication additive et que la pièce moulée de brosse à dents et le tapis de poils sont constitués ou sont fabriqués à partir de plusieurs matériaux ayant de différents degrés de dureté.

15. Procédé selon l'une des revendications précédentes, **caractérisé en ce qu'**un moule d'injection ou un moule sous vide est fabriqué sur la base des données de scannage et **en ce que** le tapis de poils est également modélisé dans l'ensemble de données en tant que forme négative par un logiciel de CAO, et **en ce que** la brosse à dents à embout buccal est fabriquée par moulage par injection ou par moulage sous vide sur la base de celui-ci.

16. Brosse à dents embout buccal fabriquée selon la revendication 1, constituée d'un raccord de brosse à dents (12) et d'un tapis de poils (14) relié à celle-ci, où la pièce moulée de brosse à dents (12) est fabriquée sur la base de données de scannage individuelles et en ce que le tapis de poils (14) est monté ou fixé au raccord de brosse à dents (12) sur le côté intérieur.

17. Brosse à dents à embout buccal selon la revendication 16, **caractérisée en ce que** plusieurs canaux d'une part oraux et d'autre part vestibulaires de l'espace pour les poils sont formés dans la pièce moulée de brosse à dents, et **en ce qu'**un agent de rinçage est introduit dans une partie des canaux et évacué par une autre partie, et **en ce que** la pièce moulée de brosse à dents présente plusieurs canaux formés à l'intérieur, c'est-à-dire qui s'étendent à travers la pièce moulée du vestibulaire vers l'oral, qui se terminent par l'oral et/ou le vestibulaire du tapis de poils, et dont les ouvertures de sortie sont disposées au niveau des espaces interdentaires respectifs à proximité de la gencive.

18. Brosse à dents embout buccal selon la revendication 17, **caractérisée en ce que** l'embout présente sur le côté vestibulaire des conduits un adaptateur pour le raccordement d'un dispositif de rince-bouche avec lequel un produit de rinçage peut être pompé dans les canaux internes du raccord de brosse à dents pour nettoyer les espaces interdentaires.

19. Brosse à dents à embout buccal selon l'une des revendications 16 à 18, **caractérisée en ce que** la brosse à dents à embout buccal est reliée ou peut être reliée à un entraînement avec lequel la brosse à dents à embout buccal peut être soumise à des vibrations de translation et/ou de rotation, où ledit générateur de vibrations est relié à un capteur de courant, avec lequel sa consommation de courant est mesurable et signalable et ladite consommation de courant signale la résistance de brossage.
